(19) Europäisches Patentamt
European Patent Office
Office européen des brevets

(11) EP 0 836 935 B1

(12) **EUROPEAN PATENT SPECIFICATION**

(45) Date of publication and mention of the grant of the patent:
**20.08.2003 Bulletin 2003/34**

(51) Int Cl.[7]: **B32B 27/18**, B32B 27/08, C09K 15/32, C08K 3/00, C08K 3/08

(21) Application number: **97308281.1**

(22) Date of filing: **17.10.1997**

(54) **Oxygen-absorbing thermoplastic resin composition featuring excellent preservation property**

Sauerstoffabsorbierende, thermoplastische Harzzusammensetzung mit ausgezeichneten konservierenden Eigenschaften

Composition de résine thermoplastique absorbant l'oxygène présentant d'excellentes propriétés de conservation

(84) Designated Contracting States:
**DE FR GB**

(30) Priority: **18.10.1996 JP 27597696**

(43) Date of publication of application:
**22.04.1998 Bulletin 1998/17**

(73) Proprietor: **TOYO SEIKAN KAISHA LIMITED**
**Tokyo (JP)**

(72) Inventors:
- **Koyama, Masayasu**
  **Zushi-shi, Kanagawa-ken (JP)**
- **Maruhashi, Yoshitsugu**
  **Yokohama-shi, Kanagawa-ken (JP)**
- **Kogure, Masahito**
  **Yokohama-shi, Kanagawa-ken (JP)**
- **Goryoda, Toshio**
  **Yokohama-shi, Kanagawa-ken (JP)**
- **Oda, Yasuhiro**
  **Yokohama-shi, Kanagawa-ken (JP)**
- **Mukuno, Shogo**
  **Nakatsu-shi, Ohita-ken (JP)**

(74) Representative: **Brookes Batchellor**
**102-108 Clerkenwell Road**
**London EC1M 5SA (GB)**

(56) References cited:
**EP-A- 0 367 390**
**EP-A- 0 370 802**
**EP-A- 0 688 666**
**EP-A- 0 818 505**
**US-A- 4 518 674**

- **DATABASE WPI Section Ch, Week 199219 Derwent Publications Ltd., London, GB; Class A92, AN 1992-154545 XP002130806 & JP 04 090848 A (TOA GOSEI CHEM IND LTD), 24 March 1992 (1992-03-24)**
- **PATENT ABSTRACTS OF JAPAN vol. 016, no. 228 (C-0944), 27 May 1992 (1992-05-27) & JP 04 045152 A (TOPPAN PRINTING CO LTD), 14 February 1992 (1992-02-14)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 836 935 B1

## Description

### BACKGROUND OF THE INVENTION

(Field of the Invention)

The present invention relates to a multi-layer plastic container featuring excellent content-preserving property and flavor-retaining property for extended periods of time. More specifically, the invention relates to a multi-layer plastic container using an oxygen-absorbing agent, suppressing a reduction in the flavor-retaining property caused by the elution of the oxygen-absorbing agent or an oxidized product thereof, and maintaining content-preserving property and flavor-retaining property for extended periods of time.

(Description of the Prior Art)

Metal cans, glass bottles and various plastic containers have heretofore been used as packaging containers. Among them, plastic containers have been used in a variety of applications owing to their light weights, shock resistance and cost.

However, though no oxygen is permitted to permeate through the walls of the metal cans and glass bottles, oxygen permeates through the walls of the plastic containers to an extent that cannot be neglected, raising a problem from the standpoint of preserving the contents.

In order to prevent this, the walls of the plastic containers are formed in a multi-layer structure and in which one layer is composed of a resin having resistance against the permeation of oxygen, such as ethylene/vinyl alcohol copolymer.

An oxygen-absorbing agent has long been used in order to remove oxygen in the container. An example of using the oxygen-absorbing agent in the container wall has been disclosed in Japanese Patent Publication No. 1824/1987, according to which a layer obtained by blending an oxygen permeable resin with an oxygen-absorbing agent comprising chiefly a reducing substance is laminated on a layer that does not permit the permeation of the oxygen gas, in order to realize a multi-layer structure for packaging.

The oxygen-absorbing agent of the iron type features a large oxygen-absorbing rate and a large oxygen-absorbing capacity, and is advantageous from the standpoint of cost. When iron and the compounds thereof elute out into the content, however, the content loses flavor though the amount of elution may be very small.

In order to prevent the iron-type oxygen-absorbing agent from eluting into the content, means has been employed in which a resin layer without blended with the oxygen-absorbing agent is applied onto the inner and outer surfaces of the resin layer blended with the iron-type oxygen-absorbing agent in order to prevent the iron-type oxygen-absorbing agent from being exposed.

It was, however, learned that the elution of iron or a compound thereof into the content is not sufficiently prevented by simply applying a thermoplastic resin layer without blended with an oxygen-absorbing agent onto both sides of the thermoplastic resin layer that is blended with the iron-type oxygen-absorbing agent.

That is, the iron-type oxygen-absorbing agent in the layer remains completely covered with the thermoplastic resin layers that are not blended with the oxygen-absorbing agent within not long periods of time after the production of the multi-layer plastic containers. When the multi-layer plastic containers are preserved for extended periods of time, however, particles of the iron-type oxygen-absorbing agent penetrate through the thermoplastic resin coating layers and are exposed to the outside of the coating layers. As the particles penetrate through, the oxygen-absorbing agent elutes into the content to deteriorate the flavor in addition to the factor of oxygen.

EP-A-688 666 describes a multi-layer packaging material comprising a first layer having an oxygen permeability of less than $100cc/m^2\cdot day\cdot atm$ (23°C, 100%RH) and which is resistant to gas permeation; a second layer which comprises resin, of which the oxygen permeability coefficient is $200cc\cdot 0.1mm/m^2\cdot day\cdot atm$ or more, and a granular oxygen absorber, which is dispersed in the resin and which contains an oxygen absorber composition which exhibits a deoxidisation reaction when moisture is supplied thereto, such second layer being laminated over the first layer and having a deoxidising property; and a third layer of which oxygen permeability is $100cc/m^2\cdot day\cdot atm$ or more, which is laminated over the second layer and which is permeable to air.

JP-A-04-090848 describes oxygen absorbing and thermoplastic resin materials containing iron powder (having a surface area of more than $0.5m^2g^{-1}$ and a bulk density of less than $2.2gcm^{-3}$) and a metal halide. The material is used for packaging. Processes for the formation of these materials are also described.

In one aspect, the present invention provides a thermoplastic resin composition as claimed in Claim 1.

In another aspect, the present invention provides an oxygen-absorbing agent as claimed in Claim 7.

According to the present invention, it is desired that:

1. The non-uniformly distributed structure is a multi-layer structure;
2. Either the incompatible thermoplastic resins or the elastomers are propylene-type polymers and the other ones are ethylene-type polymers;
3. Said blend is the one containing propylene-type polymers and ethylene-type polymers at a weight ratio of from 100:1 to 1:1 and, particularly, from 50:1 to 3:2;
4. The oxygen-absorbing agent is an iron-type oxygen-absorbing agent;
5. The oxygen-absorbing agent is blended in an amount of from 1 to 200% by weight and, particularly, from 3 to 60% by weight per said blend;
6. The oxygen-absorbing agent is oxygen-absorbing agent particles which comprise a reducing iron powder and an oxidation-promoting agent or a catalyst firmly adhered to surfaces of said reducing iron powder;
7. In the oxygen-absorbing agent mentioned in 6 above, the oxygen-absorbing agent particles having a specific surface area of not smaller than 0.5 $m^2$/g and an apparent density of not larger than 2.2 g/cc, in which the oxidation-promoting agent or the catalyst is present in an amount of from 0.1 to 5% by weight per the reducing iron powder;
8. In the oxygen-absorbing agent particles mentioned in 6 above, the particles have a flat shape or a spindle shape and wherein the particles having an average particle diameter of from 10 to 50 μm as measured by the laser-scattering method and an aspect ratio (short axis size/long axis size) of not larger than 0.6 are present in an amount of not smaller than 50%, and the compression degree of the particles is not smaller than 20%; and
9. The oxygen-absorbing agent particles are obtained by dry-milling a reducing iron powder and a powder of an oxidation-promoting agent or a catalyst.

An oxygen-absorbing multi-layer plastic container contemplated by the present invention is obtained by laminating a thermoplastic resin layer without blended with oxygen-absorbing agent on both sides of a thermoplastic resin layer containing an oxygen-absorbing agent, wherein a resin matrix of the thermoplastic resin layer containing the oxygen-absorbing agent comprises a blend of a plurality of substantially incompatible thermoplastic resins or elastomers, said incompatible thermoplastic resins or elastomers being present in said resin matrix forming a non-uniformly distributed structure and, particularly, forming a multi-layer structure. This makes it possible to absorb the expansion of volume of the particles caused by the reaction of the oxygen-absorbing agent with oxygen in the thermoplastic resin layer containing oxygen-absorbing agent, making it possible to prevent the breakage of the thermoplastic resin coating layers that are not blended with the oxygen-absorbing agent.

The volume of the particles expand conspicuously upon the reaction of the oxygen-absorbing agent with oxygen. For example, when the particles of metal iron completely react with oxygen to form iron sesquioxide ($Fe_2O_3$), the volume expands by about 2.2 times provided iron has a density of 7.86 g/$cm^3$ and iron sesquioxide has a density of 5.1 g/$cm^3$. The resin matrix of a conventional resin layer containing oxygen-absorbing agent has a rigid structure, and the expansion of volume of the dispersed particles comprising the oxygen-absorbing agent or the oxidized product thereof so works that the dispersed particles are expelled out of the resin matrix, i.e., that the dispersed particles penetrate through the coating resin layers and break them. In particular, the resin coating layer formed on the inner surface of the container has a small thickness so as to effectively absorb oxygen remaining in the container. Therefore, the resin coating layer is subject to be easily broken permitting the oxygen-absorbing agent to elute out into the content.

According to the present invention, on the other hand, the thermoplastic resin for dispersing the oxygen-absorbing agent is formed of a blend of a plurality of substantially incompatible thermoplastic resins or elastomers which form a nonuniformly distributed structure and, particularly, a multi-layer structure in the matrix. That is, when a blend of a plurality of substantially incompatible thermoplastic resins is melt-molded, a multi-layer structure is established in which the components are distributed like layers being laminated in the direction of the thickness and extending in the direction of the plane. In this matrix structure, when the volume of particles comprising the oxygen-absorbing agent or the oxidized product thereof is expanded, peeling takes place on the interfaces of the non-uniformly distributed structure and, particularly, of the multi-layer structure, and tiny voids (gaps) develop among the interfaces, whereby expansion of volume of the particles comprising the oxygen-absorbing agent or the oxidized product thereof is absorbed by the tiny voids, and the resin coating layers are not broken.

In the present invention, it is desired that either the incompatible thermoplastic resins or elastomers which are principal components are propylene-type polymers, and the other components (of small amounts) are ethylene-type polymers. This combination works excellently for separating the phases of general resins without adversely affecting the moldability of the resins or the mechanical properties. With this combination, furthermore, the ethylene-type polymers having lower melting points than the propylene-type polymers offer an advantage of forming a fine nonuniformly distributed structure.

BRIEF DESCRIPTION OF THE DRAWINGS

Fig. 1 is a sectional view illustrating a multi-layer structure of a container of the present invention;
Fig. 2 is a sectional view illustrating another multi-layer structure of a container of the present invention; and
Fig. 3 is a diagram schematically illustrating the structure of oxygen-absorbing agent particles that are favorably used in the present invention.

DETAILED DESCRIPTION OF THE PREFERRED EMBODIMENTS

[Multi-Layer Structure of the Container]

The oxygen-absorbing multi-layer plastic container of the present invention is obtained by laminating a thermoplastic resin layer without blended oxygen-absorbing agent on both sides of a thermoplastic resin layer containing an oxygen-absorbing agent, and may have any layer constitution so far as the resin matrix of the thermoplastic resin layer containing the oxygen-absorbing agent comprises a blend of a plurality of substantially incompatible thermoplastic resins or elastomers.
Referring to Fig. 1 illustrating a multi-layer structure of a container of the present invention, a container wall 1 comprises an outer layer 2 of a moisture-resistant thermoplastic resin, an adhesive resin layer 3a, a first intermediate layer of a gas-barrier resin, an adhesive resin layer 3b, a second intermediate layer 5 of a resin composition blended with an oxygen-absorbing agent, and an inner layer 6 of a moisture-resistant thermoplastic resin. The second intermediate layer is a thermoplastic resin layer blended with an oxygen-absorbing agent, the thermoplastic resin comprising a plurality of substantially incompatible thermoplastic resins or elastomers. Attention should be given to that the second intermediate layer is formed on the inside of the gas-barrier resin layer 4.
Referring to Fig. 2 illustrating another multi-layer structure of a container of the present invention, a container wall 1 comprises an outer layer 2 of a moisture-resistant thermoplastic resin, an adhesive resin layer 3a, a first intermediate layer of a gas-barrier resin, an adhesive resin layer 3b, a second intermediate layer 5 of a resin composition blended with an oxygen-absorbing agent, a third intermediate layer 7 of a resin composition blended with an adsorptive deodorant, and an inner layer 6 of a moisture-resistant thermoplastic resin.
The oxygen-absorbing agent and the adsorptive deodorant are separately blended in the second intermediate layer 5 and in the third intermediate layer 7. It will be understood that the gas barrier resin layer 4, the oxygen-absorbing agent layer 5, and the adsorptive deodorant layer 7 are arranged in this order from the outer side.

[Oxygen-Absorbing Agent]

As the oxygen-absorbing agent used in the present invention, any oxygen-absorbing agent can be used that has heretofore been used in this kind of applications. Generally, it is desired to use a reducing oxygen-absorbing agent which is substantially insoluble in water. Suitable examples include reducing metal powders such as reducing iron, reducing zinc, and reducing tin powder; low-valent metal oxides such as ferrous oxide, tri-iron tetroxide as well as reducing metal compounds such as iron carbide, ferrosilicon, iron carbonyl and iron hydroxide, which may be used in one kind or in combination as a main component. As required, they may be used in combination with a hydroxide of an alkali metal or an alkaline earth metal, carbonate, sulfite, thiosulfate, tertiary phosphate, secondary phosphate, organic acid salt and halogenide.
There can be further quoted high molecular compounds having a polyhydric phenol in the skeleton, such as polyhydric phenol-containing phenolaldehyde resin.
It is desired that the oxygen-absorbing agent has a particle diameter of, usually, not larger than 100 μm and, particularly, not larger than 50 μm in average.
In the present invention, it is particularly desired to use an iron-type oxygen-absorbing agent having a large oxygen-absorbing rate and a large oxygen-absorbing capacity from the standpoint of effectively preventing off-flavor.
The oxygen-absorbing agent can be used in combination with a water-absorbing agent. As the water-absorbing agent, there can be used a deliquescent inorganic salt, deliquescent organic compound and a highly water-absorbing resin. Examples of the deliquescent substances include inorganic salts such as sodium chloride, calcium chloride, zinc chloride, ammonium chloride, ammonium sulfate, sodium sulfate, magnesium sulfate, disodium hydrogenphosphate, sodium diphosphate, potassium carbonate, and sodium nitrate; and organic compounds such as glucose, fruit sugar, sucrose, gelatin, modified casein, modified starch, tragacanth gum, polyvinyl alcohol, CMC, sodium polyacrylate and sodium alginate.
It is desired that the water-absorbing agent is used in an amount of from 0.1 to 10% by weight and, particularly,

from 1 to 5% by weight per the oxygen-absorbing agent. The water-absorbing agent can be used in one kind or in combination. For example, a high molecular water-absorbing agent can be used in combination with an inorganic acid.

In the present invention, the oxygen-absorbing agent particles to be mixed into the thermoplastic resin comprise a reducing iron powder and a layer of an oxidation-promoting agent or a catalyst firmly adhered to surfaces of the reducing iron powder, and, particularly, contain the oxidation-promoting agent or the catalyst in an amount of from 0.1 to 5% by weight per the reducing iron powder and have a specific surface area of not smaller than 0.5 $m^2/g$ and an apparent density of not larger than 2.2 g/cc and satisfy the shape requirements set out below.

In this specification, the layer of the oxidation-promoting agent or the catalyst firmly adhered to surfaces of the reducing iron powder means not only that the oxidation-promoting agent or the catalyst is adhered to the surfaces of the reducing iron particles but also that the layer of the oxidation-promoting agent or the catalyst remains firmly adhered on the surfaces of the reducing iron powder without substantially being peeled off even under the condition of being kneaded together with the thermoplastic resin.

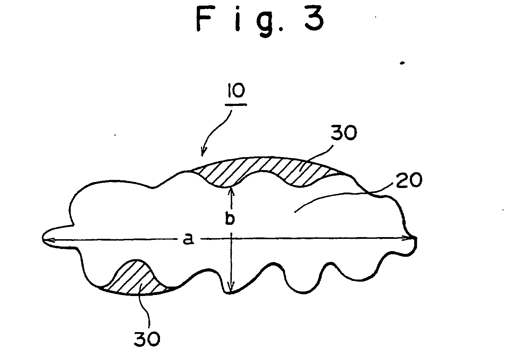

Referring to Fig. 3 schematically illustrating the structure of the oxygen-absorbing agent particles used in the present invention, a particle 10 comprises a core particle 20 of a reducing iron powder and a layer 30 of the oxidization-promoting agent or the catalyst firmly adhered to the surface thereof, the particle having a long axis size a and a short axis size b.

When the surfaces of the reducing iron powder are simply coated with the oxidation-promoting agent or the catalyst, the oxidation-promoting agent particles or the catalyst particles split off the surfaces of the reducing iron particles when being kneaded together with the thermoplastic resin, and the reducing iron free particles and the oxidation-promoting agent particles or the catalyst free particles are made present in the resin composition. This also occurs even when the oxidation promoting agent is applied to the iron powder using an aqueous solution, since the oxidation-promoting agents precipitate in the form of crystals. The oxidation-promoting agent or the catalyst in the resin composition absorbs the water that has permeated into the resin. However, since a distance is maintained relative to the reducing iron particles, the reducing iron powder is not quickly oxidized and the oxygen-absorbing rate becomes small. Besides, water concentrates in the portions of the oxidation-promoting agent particles or the catalyst particles, whereby the resin composition is swollen, and the outer surface of the container becomes rugged.

In the oxygen-absorbing agent particles preferably used in the present invention, on the other hand, the layer of the oxidation-promoting agent or the catalyst stably remain being firmly adhered to the surfaces of the reducing iron particles even after melt-kneaded together with the thermoplastic resin. Therefore, the water absorbed by the oxidation-promoting agent or the catalyst readily activates the reducing iron powder, whereby absorption of oxygen is promoted by the oxidizing reaction of iron and the oxygen-absorbing rate is maintained at a high level. Moreover, the appearance is prevented from being deteriorated by the occurrence of swelling and cracks caused by the water which concentrates in the portions of the oxidation-promoting agent or the catalyst.

In the embodiment of the invention, it is desired that the oxidation-promoting agent or the catalyst is present in an amount of from 0.1 to 5% by weight and, particularly, from 0.2 to 3.0% by weight per the reducing iron powder. When the amount of the oxidation-promoting agent or the catalyst is smaller than the above-mentioned range, the oxygen-absorbing rate becomes smaller than that of when the above-mentioned amount lies within the range of the present invention. When the above-mentioned amount is larger than the above-mentioned range, on the other hand, the resin composition as a whole loses resistance against the water and other properties, which is not desirable.

It is further desired that the oxygen-absorbing agent particles used in the present invention have a specific surface area of not smaller than 0.5 $m^2/g$ and an apparent density of not larger than 2.2 g/cc in addition to the above-mentioned constitution. When the specific surface area is not larger than 0.5 $m^2/g$ or when the apparent density is not smaller than 2.2 g/cc, the oxygen-absorbing rate decreases as will be exemplified later, and the amount of residual oxygen in the container becomes considerably larger than that of when above-mentioned specific areas and the apparent densities lie within the above-mentioned ranges. This is presumably due to that the resin composition blended with the oxygen-absorbing agent absorbs oxygen through the surfaces of the oxygen-absorbing agent particles, and oxygen is not effectively absorbed through the surfaces of the particles when the oxygen-absorbing agent particles have a specific surface area and an apparent density that lie outside the above-mentioned ranges.

It is desired that the oxygen-absorbing agent particles have a flat shape or a spindle shape having a compression degree (as measured by a method that will be described later) of not smaller than 20% and,. particularly, from 30 to 90% and wherein not less than 50% of the particles have an average particle diameter of from 10 to 50 μm as measured by the laser-scattering method and an aspect ratio (short axis size/long axis size) of not larger than 0.6. The oxygen-absorbing agent particles having an average particle diameter within the above-mentioned range exhibits excellent dispersion in the thermoplastic resin and excellent oxygen-absorbing property. When use is made of the oxygen-absorbing agent particles having a compression degree of smaller than 20% or in which less than 50% of the particles have an aspect ratio of not larger than 0.6, the exhibited oxygen-absorbing performance is inferior to that of the oxygen-absorbing agent particles lying within the preferred range of the present invention, and the container exhibits inferior appearance. This is considered to be that decreasing the aspect ratio or increasing the compression degree, i.e.,

increasing the degree of flatness, makes it possible to increase the surface areas of the particles and, hence, to increase the oxygen-absorbing rate, to orient the oxygen-absorbing agent particles in the direction of melt-flow of the resin composition, i.e., in the direction of the layers, contributing to preventing the swelling in the direction of the thickness and the occurrence of cracks.

Desirably, the oxygen-absorbing agent particles are obtained by dry-milling a reducing iron powder and a powder of the oxidation-promoting agent or the catalyst. In the dry-milling, the powder of the oxidation-promoting agent or the catalyst is milled and is rubbed against the surfaces of the reducing iron particles so as to form a layer that is firmly adhered thereto. The firmly adhered part is never accomplished by a conventional simple blending method or a method in which the reducing iron powder is mixed with an aqueous solution of the oxidation-promoting agent or the catalyst and is dried. In addition, the dry-milling accomplishes the actions of desirably adjusting the particle sizes of the reducing iron powder and controlling the flatness of the reducing iron particles to lie within the above-mentioned range.

The reducing iron powder is generally obtained by reducing an iron oxide (e.g., mill scale) formed in the step of producing a steel with coke, milling the formed sponge iron, followed by finish-reduction in a hydrogen gas or a cracked ammonia gas, electrolytically precipitating iron from an aqueous solution of iron chloride obtained through the step of washing with acid, followed by milling and finish-reduction. That is, iron oxides such as iron rust formed on the surfaces of the product in the step of producing a steel are relatively in a pure form, and iron chloride obtained by washing the iron rust with acid is in a pure form, too. Iron oxide is reduced by firing at a temperature of, generally, from about 600 to about 1200°C.

The production of reducing iron is not limited to reducing iron washed with acid by firing, but includes spraying molten iron into a nonoxidizing atmosphere, milling pure metal iron, and thermally decomposing iron carbonyl with water vapor, provided the starting iron is in a pure form.

The reducing iron powder should have properties lying within ranges mentioned above. To prevent the resin from being deteriorated and to improve flavor-retaining property, however, it is desired that copper is contained in an amount of not larger than 150 ppm and sulfur is contained in an amount of not larger than 500 ppm with respect to iron.

As the oxidation-promoting agent or the catalyst for being firmly adhered to the surfaces of the reducing iron powder, there can be exemplified a water-soluble or deliquescent inorganic electrolyte. Concrete examples include inorganic salts such as sodium chloride, calcium chloride, zinc chloride, ferrous chloride, ferric chloride, ammonium chloride, ammonium sulfate, sodium sulfate, magnesium sulfate, disodium hydrogenphosphate, sodium diphosphate, potassium carbonate and sodium nitrate.

Among them, it is particularly desired to use a chloride of an alkali metal or an alkaline earth metal and, particularly, sodium chloride, calcium chloride or ferric chloride. Use of a manganese salt such as manganese chloride ($MnCl_2$) or the like in addition thereto is effective in absorbing oxygen since the oxidation is promoted.

As the oxidation-promoting agent, there can be effectively used a water-soluble organic compound, such as glucose, fruit sugar, sucrose, gelatin, modified casein, modified starch, tragacanth gum, polyvinyl alcohol, CMC, sodium polyacrylate or sodium alginate. These organic oxidation-promoting agents or catalysts may be mixed into the thermoplastic resin in the form of oxygen-absorbing agent particles, or may be mixed into the resin separately from the oxygen-absorbing agent particles. In the present invention, it needs not be pointed out that a plurality of oxidation-promoting agents or catalysts can be used in combination.

In the present invention, the reducing iron powder and the oxidation-promoting agent or the catalyst are used in combination at a ratio as described above in detail. The oxidation-promoting agent or the catalyst is firmly adhered to the surfaces of the reducing iron powder by dry-milling the reducing iron powder and the powder of the oxidation-promoting agent or the catalyst. The end point of the dry-milling can be learned as the presence of the free solid particles of the oxidation-promoting agent or the catalyst become no longer confirmed through an electron microscope. As the dry-milling, there can be used such as vibration mill, ball mill, tube mill or super mixer. Though generally not required, the free fine powder of the oxidation-promoting agent or the catalyst can be removed, by sieving or by classification with wind power, from the oxygen-absorbing agent particles obtained after the dry-milling.

[Resin Matrix]

As the resin matrix for dispersing the oxygen-absorbing agent, there can be used a blend of a plurality of thermoplastic resins or elastomers which can be dispersed under the conditions of being melted but which are substantially incompatible.

Examples of the thermoplastic resin include olefin resin, thermoplastic polyester resin, polyamide resin, acrylic resin, styrene resin, vinyl resin and polycarbonate resin. These resins may have molecular weights large enough for forming a film. The resin to be used in combination may be the one of the same kind or different kind so far as the above-mentioned conditions are satisfied.

A resin which can be easily blended with the oxygen-absorbing agent and permits the permeation of oxygen,

is an olefin resin. As the olefin resin, there can be used a copolymer comprising chiefly olefins such as homopolymers of olefins like low-density polyethylene, medium-density polyethylene, high-density polyethylene, homopolypropylene, poly-1-butene, and poly-4-methyl-1-pentene, copolymers of olefins such as random or block copolymers of α-olefins like ethylene, propylene, 1-butene, 1-pentene, 1-hexene and 4-methyl-1-pentene, as well as ethylene-vinyl acetate copolymer, ethylene(meth)acrylate copolymer, ionomer (ionically crosslinked olefin copolymer), ethylene-vinyl alcohol copolymer, and ethylene-vinyl chloride copolymer, in combination with other monomers as required.

Examples of the thermoplastic elastomer include ethylene-propylene rubber (EPR), ethylene-propylene-diene rubber (EPDM), thermoplastic elastomer such as styrene-butadiene-styrene block copolymer, styrene-isoprene-styrene block copolymer, styrene hydride-butadiene-styrene block copolymer, styrene hydride-isoprene-styrene block copolymer, hydrogenated butadiene-isoprene block copolymer, nitrile-butadiene rubber (NBR), styrene-butadiene rubber (SBR), chloroprene rubber (CR), polybutadiene (BR), polyisoprene (IIB), butyl rubber, natural rubber, thermoplastic polyurethane, silicone rubber and acrylic rubber. Among them, a hydrocarbon elastomer and, particularly, EPR and EPDM are preferred.

Examples of the combination of incompatible thermoplastic resins or elastomers include propylene polymer/ethylene polymer, polyamide/olefin resin, polyamide/styrene resin, polyamide/ABS resin, polyethylene terephthalate/polybutene terephthalate, polycarbonate/polystyrene resin, polyester resin/olefin resin, and polycarbonate/polyester resin.

A combination of resins particularly suited for the object of the present invention is that of a crystalline propylene polymer and an ethylene polymer, facilitating the dispersion of the oxygen-absorbing agent and heat-molding. As the crystalline propylene polymer, there can be used a homopolypropylene as well as a random or a block copolymer containing ethylene in an amount of from 1 to 20% by weight and, particularly, from 2 to 15% by weight. These polypropylenes may have an isotactic structure or a syndiotactic structure.

Examples of the ethylene polymer include high-density polyethylene (HDPE), medium-density polyethylene (MDPE), low-density polyethylene (LDPE), linear low-density polyethylene (LLPDE), at least one copolymer of ethylene and other olefin such as propylene, butene-1, pentene-1, hexene-1, 4-methylpentene-1, octene-1, or decene-1, and ethylene/vinyl acetate copolymer, ethylene/acrylate copolymer, ionomer, etc.

The ratio of one resin and other resin in the resin matrix can be varied over a wide range and, desirably, from 100:1 to 1:1 and, particularly, from 50:1 to 3:2 on the weight basis.

In the present invention, it is allowable to use a compatibility-imparting agent to adjust the degree of dispersion of the resins or elastomers in the resin matrix. The compatibility-imparting agent works to enhance the mutual action among different polymers, and is a block copolymer or a graft copolymer having the same components as the polymers A, B to be blended, is a block copolymer or a graft copolymer having a third component to be mixed in the form of molecules into either one of the polymer A or B to be blended, or is a graft copolymer of two polymers compatible with either one of the polymer A or B to be blended.

When attention is given to the functions, the compatibility-imparting agents are grouped into two, i.e., compatibility-imparting agents of the non-reaction type and compatibility-imparting agents of the reaction type. Examples of the former compatibility-imparting agent include styrene-ethylene-butadiene block copolymer, polyethylene-methyl polymethacrylate block copolymer and polyethylene-polystyrene block copolymer. Examples of the latter compatibility-imparting agent include maleic anhydride-modified olefin resin and, particularly, maleic anhydride-grafted polypropylene and polyethylene, styrene-maleic anhydride copolymer, ethylene-glycidyl dimethacrylate copolymer, ethylene-acrylic ester-maleic anhydride copolymer, and styrene-glycidyl dimethacrylate copolymer.

These compatibility-imparting agents can be made present in the resin matrix in an amount of from 1 to 20% by weight and, particularly, from 2 to 10% by weight.

[Resin Composition Blended with Oxygen-Absorbing Agent]

In the present invention, it is desired that the oxygen-absorbing agent is used at a concentration of from 1 to 200 parts by weight and, particularly, from 3 to 60 parts by weight per 100 parts by weight of the resin matrix. When the content of the oxygen-absorbing agent is lower than the above-mentioned range, it becomes difficult to suppress the oxygen concentration in the container to be smaller than the concentration suited for growing microorganisms. Even when the amount of the oxygen-absorbing agent is larger than the above-mentioned range, no distinguished effect is exhibited for lowering the oxygen concentration accompanied rather by disadvantages such as molding operation and cost.

The oxygen-absorbing agent and the resin matrix may be mixed together by either the so-called dry-blending or melt-blending. In order to favorably disperse the oxygen-absorbing agent, furthermore, a resin composition (master batch) containing the oxygen-absorbing agent at a high concentration may be prepared and may then be mixed into the resin matrix.

[Thermoplastic Resin]

In the present invention, the thermoplastic resin layer to be provided on both sides of the resin layer blended with the oxygen-absorbing agent will be a moisture-resistant resin (which absorbs little water) and, particularly, a thermoplastic resin having a coefficient of water absorption of not larger than 0.5% and, particularly, not larger than 0.1% as measured in compliance with ASTM D 570. Representative examples include olefin resins such as low-, medium- or high-density polyethylene, isotactic polypropylene, ethylene-propylene copolymer, polybutene-1, poly-4-methyl-1-pentene, ethylene-butene-1 copolymer, propylene-butene-1 copolymer, ethylene-propylene-butene-1 copolymer, ethylene-vinyl acetate copolymer, ionically crosslinked olefin copolymer (ionomer) or a blend thereof, as well as styrene resins such as polystyrene, styrene-butadiene copolymer, styrene-isoprene copolymer and ABS resin, and thermoplastic polyesters such as polyethylene phthalate, polytetramethylene terephthalate, etc or polycarbonates.
Among them, it is desired to use an olefin resin from the standpoint of sanitation and a propylene resin from the standpoint of heat resistance.

[Gas-Barrier Resin]

As a gas-barrier resin used as required for the container envisaged by the present invention, there is used a heat-moldable thermoplastic resin having a low oxygen permeability. The most preferred example of the gas-barrier resin will be an ethylene-vinyl alcohol copolymer such as a saponified product of a copolymer obtained by saponifying an ethylene-vinyl acetate copolymer having an ethylene content of from 20 to 60 mol% and, particularly, from 25 to 50 mol% such that the degree of saponification becomes not smaller than 96 mol% and, particularly, not smaller than 99 mol%. It is desired that the saponified product of the ethylene-vinyl alcohol copolymer has a molecular weight large enough for forming a film and a viscosity of, generally, not smaller than 0.01 dl/g and, particularly, not smaller than 0.05 dl/g as measured in a mixture solvent of phenol and water at a weight ratio of 85:15 at a temperature of 30°C.
As another example of the gas-barrier resin having the above-mentioned properties, there can be used polyamides having amide groups in a number of from 5 to 50 and, particularly, from 6 to 20 per 100 carbon atoms, such as nylon 6, nylon 6,6, nylon 6/6, 6 copolymer, metaxylene adipamide, nylon 6, 10, nylon 11, nylon 12, and nylon 13. These polyamides, too, should have molecular weights large enough for forming films and a relative viscosity (ηrel) of not smaller than 1.1 and, particularly, not smaller than 1.5 as measured in concentrated sulfuric acid of a concentration of 1.0 g/dl at a temperature of 30°C.
The gas-barrier resin can be so provided as to neighbor the resin layer blended with the oxygen-absorbing agent as shown in Fig. 1.

[Adhesive Resin]

In laminating the layers, a sufficient degree of adhesiveness will not be often obtained between the gas-barrier resin and the moisture-resistant thermoplastic resin as in the case of the ethylene/vinyl alcohol copolymer. In this case, an adhesive resin layer is interposed between them.
As the adhesive resin, there can be exemplified a thermoplastic resin having carbonyl

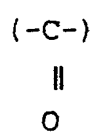

groups based on carboxylic acid, carboxylic anhydride, carboxylate, amide carboxylate or carboxylic ester in the main chain or in the side chain at a concentration of from 1 to 700 milliequivalent (meq)/100 g of the resin and, particularly, from 10 to 500 meq/100 g of the resin. Suitable examples of the adhesive resin include ethylene-acrylic acid copolymer, ionically crosslinked olefin copolymer, maleic anhydride-grafted polyethylene, maleic anhydride-grafted polypropylene, acrylic acid-grafted polyolefin, ethylene-vinyl acetate copolymer, copolymerized polyester and copolymerized polyamide, which may be used in one kind or in a combination of two or more kinds. These resins can be effectively laminated by the simultaneous extrusion or by sandwich lamination. Furthermore, a thermosetting adhesive resin of the isocyanate type or the epoxy type can be used for adhering the gas-barrier resin film that has been formed and the moisture-resistant resin film.

[Laminated-Layer Constitution]

It is desired that the resin layer blended with the oxygen-absorbing agent has a thickness of generally from 10 to 200 μm and, particularly, from 20 to 150 μm though it may vary depending upon the amount of oxygen permitted to be contained in the container and the shape of the container.
The moisture-resistant resin layer has a thickness of generally from 20 to 300 μm and, particularly, from 50 to 150 μm when it is provided on both sides of the resin layer blended with the oxygen-absorbing agent, and has a thickness which is from 0.1 to 30 times as great and, particularly, from 0.5 to 10 times as great when it is provided as an intermediate layer. The inner layer and the outer layer may have an equal thickness, or either the inner layer or the outer layer may have a thickness larger than the other.
It is desired that the gas-barrier resin layer has a thickness of generally from 5 to 200 μm and, particularly, from 10 to 100 μm.

[Method of Preparation]

Except for the above-mentioned layer constitution, the container envisaged by the present invention can be produced by a method that has been known per se.
To simultaneously extrude many layers, the resin layers are melt-kneaded in the corresponding extruders, and are extruded into a predetermined shape through a multi-layer multiple die such as T-die or circular die. Furthermore, the resin layers are melt-kneaded in the corresponding extruder, co-extruded or successively extruded into an extrusion metal mold thereby to prepare a multi-layer container or a preform for the container. It is also allowable to employ a layer lamination system such as dry lamination, sandwich lamination or extrusion coating.
The molded article may assume the form of a film, a sheet, a parison or a pipe for forming bottle or tube, or a preform for forming bottle or tube. The bottle is easily formed from the parison, pipe or preform by pinching off the extruded product in a pair of split molds and blowing a fluid therein. Further, the pipe or preform is cooled and is, then, heated at a drawing temperature, drawn in the axial direction, and is blow-drawn in the circumferential direction utilizing the fluid pressure to obtain draw-blown bottles.
Furthermore, the film or the sheet is subjected to such means as vacuum molding, compressed-air molding, reverse draw forming or plug-assisted molding to obtain a packaging container in the form of a cup, tray, etc.
Furthermore, the multi-layer films can be overlapped or folded like a bag, followed by heat-sealing the periphery to obtain a bag-like container.

[Use]

The multi-layer plastic container can be effectively used as a sealed packaging container for sterilizing the content with hot water, for hot-filling the content or for heating the content for retort sterilization etc. The multi-layer plastic container of the present invention can be further effectively used as a packaging container for cooking the content by heating it by microwaves in a microwave oven after the content sealed therein is taken out.
In an ordinary state, the gas-barrier resin layer works to prevent the permeation of oxygen, i.e., to shut off oxygen. Under the conditions where the water and heat act simultaneously such as in the sterilization by heat, the oxygen-absorbing agent present in the intermediate resin layer effectively works to shut off oxygen. Thus, the functions are effectively shared depending upon the state where the container is placed. That is, under the conditions where the water and heat act simultaneously, the water permeates conspicuously through the moisture-resistant resin layer and the gas-barrier resin further raises its temperature upon absorbing moisture to lose its oxygen-barrier property. However, the water that is absorbed and the heat that is given activate the oxygen-absorbing agent which, then, effectively traps oxygen, thus eventually suppressing the permeation of oxygen during the sterilization by heat.
According to the present invention, the thermoplastic resin in which the oxygen-absorbing agent will be dispersed is formed of a blend of a plurality of substantially incompatible thermoplastic resins or elastomers, so that the incompatible thermoplastic resins or elastomers form a nonuniformly distributed structure and, particularly, a multi-layer structure in the matrix. In this matrix structure, therefore, in case the particles comprising the oxygen-absorbing agent or the oxidized product thereof undergo expansion, the nonuniformly distributed structure develops peeling on the interfaces of the multi-layer structure and tiny voids (gaps) in the interfaces. Therefore, the expansion of volume of the particles comprising the oxygen-absorbing agent or the oxidized product thereof is absorbed by the tiny voids, and the resin coating layers are prevented from being broken.

EXAMPLES

The invention will be further described by way of Examples. In the following Examples, measurements were

taken in a manner as described below.

[Apparent Density]

Measured in compliance with JIS K 6721 maintaining a gap of 38 mm between the flow-out stopper of the funnel and the receiving unit. The receiving unit is of a cylindrical shape having a content of 5 $cm^3$. A sample to be measured is poured into the funnel and is stopped immediately after the receiving unit is filled with the sample and the sample starts over-flowing. The powder swelling on the receiving unit is flatly scraped off along the upper end of the receiving unit using a spatula paying attention so as not to give vibration thereto. The powder adhered on the outer side of the receiving unit is mildly removed, and the powder is weighed by weighing the weight of the cup.

[Packed Apparent Density and Degree of Compression]

The receiving unit is filled with the powder up to its upper end like the case of measuring the apparent density. The receiving unit filled with the powder is horizontally raised by 3 cm and is allowed to fall. This operation is repeated 30 times, and the powder is further poured into space formed at the upper end of the receiving unit as the powder is compressed. The receiving unit is similarly allowed to fall another 30 times to compress the powder. The powder is poured into space formed in the receiving unit, and the receiving unit is allowed to fall another 6 times. Finally, the upper end is flatly scraped off, and the receiving unit is accurately weighed to find a packed apparent density.

The compression degree is calculated in compliance with the following formula,

$$\frac{\text{(Packed apparent density) - (apparent density)}}{\text{(Packed apparent density)}} \times 100\ (\%)$$

[Specific Surface Area]

Measured in compliance with the BET one-point method. The measuring device is of the Shimazu Flow-sorb type.

[Particle Diameter]

Measured in compliance with the laser diffraction-scattering method. The measuring device is a particle diameter distribution measuring device of the Shimazu laser diffraction type, SALD1100, and ethanol is used as a dispersion medium for the particles. Fifty-percent particle diameter is regarded to be an average particle diameter.

[Aspect Ratio]

The oxygen-absorbing agent particles are expanded into 250 times, photographed, and the aspect ratio is found from the formula R = b/a wherein a denotes the length of the longest axis of the particle and b denotes the length of an axis that intersects the middle point of the long axis at right angles.

(Example 1)

A 4-kind 6-layer sheet was prepared by co-extruding an inner layer and an outer layer of a propylene/ethylene block copolymer (trade name; EC9J) produced by Mitsubishi Kagaku Co., a first intermediate layer of an ethylene-vinyl alcohol copolymer (trade name; EP-T101A) produced by Kurarey Co., a second intermediate layer of a resin composition in which a resin matrix was comprised of a resin blended with 25 parts by weight of an ethylene-$\alpha$-olefin copolymer (trade name; Toughmer P-0680) produced by Mitsui Sekiyu Kagaku Kogyo Co. per 100 parts by weight of a propylene-ethylene random copolymer (trade name; EX8) produced by Mitsubishi Kagaku Co., and further containing 30 parts by weight of an iron-type deoxidant (hereinafter referred to as blended iron-type deoxidant) of a blend of a reducing iron powder and a sodium chloride powder per 100 parts by weight of the matrix, and the adhesive resin layers among the ethylene-vinyl alcohol copolymer and the neighboring layers. Fig. 1 shows the constitution of layers and Table 1 shows the constitution of thicknesses. The polypropylene resin forming the inner layer was blended with 12% by weight of titanium oxide and the polypropylene resin forming the outer layer was blended with 6% by weight of titanium oxide in order to conceal black color of the iron-type deoxidant.

By using a vacuum molding machine manufactured by Yamazaki Kanagata Co., the above multi-layer sheet was vacuum-molded into a container having a volume of 110 ml and a surface area of 120 $cm^2$ in such a manner that the second intermediate layer faced the inner side. The container was filled with 5 ml of water and was sealed and

was preserved in a constant-temperature constant-humidity vessel maintained at a temperature of 30°C and a relative humidity of 80%RH for 6 months in order to oxidize the iron-type deoxidant in the container wall.

After preservation, the sectional wall of the container was observed through a scanning-type electron microscope JSM-6300F manufactured by Nippon Denshi Co., and it was learned that tiny peelings took place in many number in a stratified form among the interfaces in the second intermediate layer in cross section.

After preservation, furthermore, the inner surface of the container was evaluated for its ruggedness by ten panelists to evaluate the appearance of the container. The evaluation was based on five steps of from evaluation 1 (not acceptable) to evaluation 5 (excellent). The average values are shown in Table 2, and evaluations of 3 or higher are regarded to be favorable appearances. The results are shown in Table 2. The inner surface of the container was smooth even after preserved for six months, and favorable appearance was maintained.

(Example 2)

A multi-layer sheet was prepared quite in the same manner as in Example 1 but changing the resin composition of the second intermediate layer into the one in which the resin matrix was comprised of a resin blended wich 25 parts by weight of a low-density polyethylene (trade name; HE30) produced by Mitsubishi Kagaku Co. per 100 parts by weight of a propylene-ethylene random copolymer (trade name; EX8) produced by Mitsubishi Kagaku Co., and further containing 30 parts by weight of a blended iron-type deoxidant per 100 parts by weight of the resin matrix. A container was formed and preserved, and the sectional surface of the container wall was observed and the appearance of the container was evaluated. As a result of observing the sectional area of the container wall, many tiny peelings were observed in a stratified form in the interfaces in the second intermediate layer in cross section like in Example 1. The result of appearance is shown in Table 2. Even after preserved for six months, the inner surface of the container was smooth and favorable appearance was maintained.

(Example 3)

A multi-layer sheet was prepared quite in the same manner as in Example 1 but changing the resin composition of the second intermediate layer into the one in which the resin matrix was comprised of a resin blended with 25 parts by weight of an ethylene-vinyl acetate copolymer (trade name; LV420) produced by Mitsubishi Kagaku Co. per 100 parts by weight of a propylene-ethylene random copolymer (trade name; EX8) produced by Mitsubishi Kagaku Co., and further containing 30 parts by weight of a blended iron-type deoxidant per 100 parts by weight of the resin matrix. A container was formed and preserved, and the sectional surface of the container wall was observed and the appearance of the container was evaluated. As a result of observing the sectional area of the container wall, many tiny peelings were observed in a stratified form in the interfaces in the second intermediate layer in cross section like in Example 1. The result of appearance is shown in Table 2. Even after preserved for six months, the inner surface of the container was smooth and favorable appearance was maintained.

(Example 4)

A multi-layer sheet was prepared quite in the same manner as in Example 1 but changing the resin composition of the second intermediate layer into the one in which the resin matrix was comprised of a resin blended with 25 parts by weight of an ionomer (trade name; Himilan 1707) produced by Mitsui-Du Pont Polychemical Co. per 100 parts by weight of a propylene-ethylene random copolymer (trade name; EX8) produced by Mitsubishi Kagaku Co., and further containing 30 parts by weight of a blended iron-type deoxidant per 100 parts by weight of the resin matrix. A container was formed and preserved, and the sectional surface of the container wall was observed and the appearance of the container was evaluated. As a result of observing the sectional area of the container wall, many tiny peelings were observed in a stratified form in the interfaces in the second intermediate layer in cross section like in Example 1. The result of appearance is shown in Table 2. Even after preserved for six months, the inner surface of the container maintained favorable appearance.

(Comparative Example 1)

A multi-layer sheet was prepared quite in the same manner as in Example 1 but changing the resin composition of the second intermediate layer into the one containing 30 parts by weight of a blended iron-type deoxidant per 100 parts by weight of a propylene-ethylene random copolymer (trade name: EX8) produced by Mitsubishi Kagaku Co. A container was formed and preserved, and the sectional surface of the container wall was observed and the appearance of the container was evaluated. As a result of observing the sectional area of the container wall, the oxygen-absorbing agent had been swollen in the second intermediate layer in cross section, resulting in the occurrence of ruggedness

on the surface of the container. The appearance was deteriorated as shown in Table 2.

Table 1

| | Thickness of the layer (μm) |
|---|---|
| Inner layer | 70 |
| Second intermediate layer | 100 |
| Adhesive layer | 10 |
| First intermediate layer | 30 |
| Adhesive layer | 10 |
| Outer layer | 280 |

Table 2

| | Evaluation of appearance |
|---|---|
| Example 1 | 4.7 |
| Example 2 | 4.5 |
| Example 3 | 3.9 |
| Example 4 | 3.7 |
| Comparative Example 1 | 2.5 |

(Example 5) (outside the scope of claim 1)

100 Parts by weight of a reducing iron powder produced from an iron ore and granulated to 2.4 mm to 12 mm and 2 parts of sodium chloride (NaCl) having an average particle diameter of 20 μm were introduced in a total amount of 1.5 kg into a vibration mill of a capacity of 3.0 liters together with steel balls, and were vibration-milled for 3 hours thereby to rub NaCl onto the surfaces of the iron powder. After the operation was finished, the NaCl powder could no longer be confirmed by eyes. The thus prepared NaCl-adhered iron powder (hereinafter referred to as adhered adsorbing agent) possessed a specific area of 1.8 $m^2/g$, an apparent density of 1.7 $g/cm^3$ and an average particle diameter of 28 μm. A polypropylene (PP) having an MI of 0.6 (g/10 min, 230°C) blended with 30% by weight of the adhered absorbing agent was pelletized.

A 2-kind 3-layer sheet (having a total thickness of 210 μm, constitution ratio of white PP:PP:white PP = 1:1:1) was prepared having an intermediate layer of a polypropylene (PO) blended with the adhered absorbing agent and inner and outer layers of a white PP obtained by blending a PP having an MI of 0.6 with 8% by weight of titanium white, by using a molding apparatus comprising an inner layer extruder, an outer layer extruder, an intermediate layer extruder, a feed block, a T-die, a cooling roll and a sheet take-up device.

100 Parts by weight of a reducing iron powder that has been milled to possess a specific surface area of 2.4 $m^2/g$ and an apparent density of 1.9 $g/cm^3$ and 2 parts of NaCl were introduced into a V-type mixer and were blended together for 30 minutes to prepare an absorbing agent. The PP blended with this absorbing agent was pelletized to prepare a 2-kind 3-layer sheet in the same manner as described above (comparative example 5).

Test pieces (30 x 30 mm) prepared from these sheets were introduced into a gas-impermeable cup (having a volume of 85 ml) together with 1 ml of distilled water, and were heat-sealed with a heat-sealing closure member made of a gas-impermeable aluminum foil-laminated film, and were preserved at 50°C. After preserved for a predetermined period of time, the oxygen concentration in the container was measured, the oxygen-absorbing amounts of the sheets were found, and the appearance of the sheet pieces was observed. As shown in Table 3, the sheets exhibited increased oxygen-absorbing rates without any change in the appearance.

Table 3

| | Amount of absorbing oxygen ($cc/cm^2$) | | | Appearance |
|---|---|---|---|---|
| | 1 day | 3 days | 7 days | |
| Example 5 | 0.08 | 0.14 | 0.15 | no change |
| Comparative Example 5 | 0.01 | 0.03 | 0.04 | rugged |

(Example 6) (not in accordance with the claims)

A 4-kind 6-layer sheet (having a total thickness of 0.8 mm, a constitution ratio of PP/ADH/EVOH/ADH/PO/PP = 40/1/10/1/20/10) was formed having a first intermediate layer of polypropylene pellets (PO) blended with an adhered absorbing agent having a specific surface area of 1.8 $m^2/g$ and an apparent density of 1.7 $g/cm^3$, a second intermediate layer of an ethylene-vinyl alcohol copolymer (EVOH: ethyl content of 32 mol%, saponification degree of 99.6 mol%), an inner layer and an outer layer of a white PP obtained by mixing a titanium white pigment into a PP having a melt index (MI) of 0.5 g/10 min (230°C), and adhesive layers of a maleic anhydride-modified PP (ADH) having an MI of 1.0 g/10 min (230°C). The obtained sheet was heated at 190°C and was formed into a square cup having a depth of 30 mm and a volume of 115 ml in a manner that the PO layer was on the inside of the EVOH layer by using a vacuum molding machine. The cup was filled with 1 ml of water and was heat-sealed with a gas-impermeable aluminum foil-laminated closure member in a nitrogen atmosphere. After retort sterilization at 120°C for 30 minutes, the cup was preserved in an atmosphere maintained at 30°C and 80%RH, and the oxygen concentration in the container was measured after every passage of a predetermined period of time.

As a comparative product, 100 parts of reducing iron that is suitably granulated and 2 parts of NaCl having an average particle diameter of 20 µm were introduced into the same vibration mill as that of Example 5 to prepare an adhered oxygen-absorbing agent having a final shape of a specific surface area of 0.4 $m^2/g$ and an apparent density of 2.45 $g/cm^3$. The same cup was formed by using the same molding machine as used in this Example, preserved in the same manner, and the oxygen concentration in the container was measured after every passage of a predetermined period of time (Comparative Example 6-1).

The results were as shown in Table 4. Furthermore, the same cup was formed by using the same sheet but using PP instead of PO, and the preservation testing was conducted (Comparative Example 6-2).

Table 4

| Results (oxygen-barrier property of the container) | | | | | | |
|---|---|---|---|---|---|---|
| | Oxygen concentration (%) in the container | | | | | |
| | Immediately after retorting | 1W | 2W | 1M | 2M | 3M |
| Example 6 | 0.08 | 0.11 | 0.16 | 0.16 | 0.30 | 0.42 |
| Comparative Example 6-1 | 0.08 | 0.16 | 0.39 | 0.40 | 0.71 | 0.95 |
| Comparative Example 6-2 | 0.29 | 0.84 | 1.45 | 1.94 | 3.02 | 3.58 |

(Example 7)

In the product of Example 5 of the invention, not less than 60% of the particles have an aspect ratio of from 0.25 to 0.60. Furthermore, the adhered absorbing agent has an apparent density of 1.7 $g/cm^3$ but a packed apparent density of 2.8 and a compression degree of (1 - 1.7/2.8) x 100 = 39%. By using this adhered absorbing agent, a 4-kind 6-layer sheet of Example 6 was prepared.

To the reducing iron powder milled into a particle diameter of 40 µm was sprayed an NaCl aqueous solution such that the ratio of iron and NaCl was 100:2. Then, the water was removed to obtain an adhered absorbing agent. The adsorbed absorbing agent exhibited a large apparent aspect ratio, and in which larger than 60% of the particles exhibited an apparent aspect ratio of not smaller than 0.6. By using this adhered absorbing agent, a 4-kind 6-layer sheet of Example 6 was formed

**(Comparative Example 7-1).**

Cups of the same shape as that of Example 6 formed by using these sheets were filled with 1 ml of distilled water and were sealed in a nitrogen atmosphere. The retort sterilization was effected at 120°C for 30 minutes to observe the oxygen concentration in the containers and the interior of the containers. The product of the invention exhibited excellent effect for suppressing the oxygen concentration in the container compared with that of the comparative product, and further exhibited excellent appearance.

As a Comparative Example 7-2, furthermore, a cup of the same constitution was prepared by using, as a starting material, an oxygen-absorbing agent which has an apparent aspect ratio comparable to that of the product of the invention but to which was adhered no NaCl that is a reaction promoting agent. A cup (Comparative Example 7-3) prepared by using, as a starting material, an absorbing agent obtained by blending an iron powder having an aspect ratio comparable to that of the Comparative Example 7-1, was similarly sterilization-treated, and the oxygen concentration inside therein and the appearance were inspected. The results were as shown in Table 5.

Table 5

| | Oxygen concentration (%) in the container | | | | | Appearance evaluation (5 steps) |
|---|---|---|---|---|---|---|
| | Immediately after | 1W | 2W | 1M | 3M | |
| Example 7 | 0.08 | 0.11 | 0.16 | 0.16 | 0.42 | 5 (good) |
| Comp.Ex.7-1 | 0.08 | 0.15 | 0.24 | 0.34 | 0.76 | 3 |
| Comp.Ex.7-2 | 0.08 | 0.14 | 0.23 | 0.40 | 0.95 | 1 |
| Comp.Ex.7-3 | 0.08 | 0.16 | 0.39 | 0.40 | 1.20 | 1 (poor) |

(Example 8)

A sheet of Example 5 was prepared by using an oxygen-absorbing agent obtained by introducing an iron powder and sodium chloride (NaCl) into a vibration mill in the same manner as in Example 5, and an iron powder granulated in the same shape as the oxygen-absorbing agent of Example 5 and to which has been sprayed an aqueous solution containing 20% of NaCl at a rate of 10 ml per 100 g of iron, followed by drying. After preserved for one day under the conditions of 50°C and 100%RH, the amount of absorbing oxygen of the sheet was measured. Both exhibited good oxygen-absorbing performance owing to the presence of the reaction promoting agent adhered to the surfaces of the iron powder, but the one obtained by the dry type method as in Example 5 exhibited an oxygen-absorbing amount of 0.11 cc/cm2 and the one obtained by the wet type method using the aqueous solution of the reaction promoting agent exhibited an oxygen-absorbing amount of 0.07 $cc/cm^2$.

(Example 9)

A polypropylene having an MI of 0.6 (g/10 min, 23°C) was blended with 30% by weight of the oxygen-absorbing agent coated with the oxidation promoting agent prepared in Example 5, and was pelletized. Similarly, furthermore, a blend of a polypropylene having an MI of 0.6 and a low-density polyethylene (LDPE) having an MI of 0.5 at a ratio of 9:1, was pelletized. By using these pellets, 3-layer sheets of Example 5 were prepared (Examples 9-1, 9-2) and were heat-sterilized at 120°C for 30 minutes.

Furthermore, a 3-layer sheet (Comparative Example 9-1) same as that of Example 5 prepared by using pellets of a mixture of PP having an MI of 0.6 and an oxygen-absorbing agent blended with the oxidation promoting agent used in the comparative product 1 of Example 1, and a 3-layer sheet (Comparative Example 9-2) prepared by using pellets of a mixture of PP having an MI of 0.6 and an LDPE having an MI of 0.5, were heat-sterilized at 120'C for 30 minutes to examine a change in the appearance.

Properties were evaluated relying upon the method of measuring the amount of absorbing oxygen used in Example 5. The results were as shown in Table 6. As will be obvious from the results, use of a resin system of a mixture of PP with LDPE makes it possible to enhance the appearance as well as the oxygen-absorbing performance.

Table 6

| | Evaluation of appearance (5 steps) | Oxygen-absorbing ability ($cc/cm^2$) |
|---|---|---|
| Example 9-1 | 4 | 0.09 |
| Example 9-2 | 5 | 0.11 |
| Comparative Example 9-1 | 1 | 0.01 |
| Comparative Example 9-2 | 3 | 0.02 |
| Excellent 5 ←→ Poor 1 | | |

(Example 10)

A 4-kind 6-layer cup of Example 6 was prepared by using an oxygen-absorbing resin composition which was the product of the invention of Example 5. This cup was filled with 50 ml of distilled water, sealed under atmospheric pressure, heat-sterilized at 120°C for 30 minutes, and was then preserved at 30°C and 80%RH.

The test was also conducted by using a similar cup (Comparative Example 10) prepared by using pellets of iron and NaCl-blended oxygen-absorbing agent used in Comparative Example 5 in Example 5.

The product of the invention exhibited no change in the appearance of the container over extended periods of time, but the Comparative Example 10 developed tiny cracks in the inner surface of the container.

According to the present invention, the thermoplastic resin in which will be dispersed the oxygen-absorbing

agent is formed of a blend of a plurality of substantially incompatible thermoplastic resins or elastomers, so that the incompatible thermoplastic resins or elastomers form a nonuniformly distributed structure and, particularly, a multi-layer structure in the matrix. In this matrix structure, therefore, when the volumes of the particles comprising the oxygen-absorbing agent or the oxidized product thereof are swollen, the interfaces are peeled off in the nonuniformly distributed structure and, particularly, in the multi-layer structure and tiny voids (gaps) develop among the interfaces. Accordingly, the swollen volumes of the particles comprising the oxygen-absorbing agent or the oxidized product thereof are absorbed by the tiny voids, and the resin coating layers are prevented from being broken.

Thus, the present invention eliminates defects inherent in the conventional oxygen-absorbing multi-layer plastic containers, suppresses a drop in the flavor-retaining property caused by the elution of the oxygen-absorbing agent or the oxidized product thereof, and maintains the content-preserving property and the flavor-retaining property for extended periods of time.

According to the preferred embodiment of the present invention, furthermore, the thermoplastic resin is blended with an oxygen-absorbing agent particles which comprise a reducing iron powder and a layer of an oxidation promoting agent or a catalyst firmly adhered to the surfaces of the reducing iron powder, and having a predetermined specific surface area and an apparent density. It is thus made possible to provide a resin composition containing an oxygen-absorbing agent featuring an enhanced oxygen-absorbing rate, without developing ruggedness after preserved for extended periods of time or after heat-sterilization, and exhibiting excellent appearance, as well as to provide packaging containers.

## Claims

**1.** A thermoplastic resin composition containing an oxygen absorbing agent, wherein a resin matrix of the thermoplastic resin composition is substantially non-compatible and is composed of blends of a plurality of thermoplastic resins and/or elastomers, one of the non-compatible thermoplastic resins and/or elastomer being a propylene polymer, and the other being an ethylene polymer, and the thermoplastic resins and/or elastomers form a non-uniformly distributed multilayer structure in the resin matrix; and the oxygen-absorbing agent is oxygen-absorbing agent particles which comprise a reducing iron powder and oxidation-promoting agent or a catalyst firmly adhered to surfaces of said reducing iron powder, and said particles have a flat shape or a spindle shape and an average particle diameter of from 10 to 50 μm as measured by a laser-scattering method and an aspect ratio (short axis size/long axis size) of not larger than 0.6, and said particles are present in an amount of not less than 50%, and the compression degree of the particles is not smaller than 20%.

**2.** A composition as claimed in claim 1, wherein said blend is the one containing propylene polymers and ethylene polymers at a weight ratio of from 100:1 to 1:1.

**3.** A composition as claimed in claim 1, wherein the oxygen-absorbing agent is an iron oxygen-absorbing agent.

**4.** A composition as claimed in claim 1, wherein the oxygen-absorbing agent is blended in an amount of from 1 to 200% by weight per the blend.

**5.** A composition as claimed in claim 1 wherein the oxygen-absorbing agent is oxygen-absorbing agent particles having a specific surface area of not smaller than $0.5m^2/g$ and an apparent density of not larger than 2.2g/cc, in which the oxidation-promoting agent or the catalyst is present in an amount of from 0.1 to 5% by weight of the reducing iron powder.

**6.** A composition as claimed in claim 1 wherein the oxygen-absorbing agent particles are obtained by dry-milling a reducing iron powder and a powder of an oxidation-promoting agent or a catalyst.

**7.** An oxygen-absorbing agent comprising oxygen-absorbing agent particles which comprise a reducing iron powder and an oxidation-promoting agent or a catalyst firmly adhered to surfaces of said reducing iron powder, and which has a specific surface area of not smaller than $0.5m^2/g$ and an apparent density of not larger than 2.2g/cc, and in which the oxidation-promoting agent or catalyst is present in an amount of 0.1 to 5% by weight of the reducing iron powder; wherein the oxygen absorbing agent particles have an average particle diameter of 10 to 50 μm as measured by a laser-scattering method and an aspect ratio (short axis size/long axis size) of 0.6 or below and are present in an amount of not less than 50% and are flat or spindle-shaped particles having a compression degree of not smaller than 20%.

8. An oxygen-absorbing resin composition obtained by blending 1 to 200 parts by weight of an oxygen-absorbing agent according to claim 7 into 100 parts by weight of a thermoplastic resin.

## Patentansprüche

1. Thermoplastische Harzzusammensetzung mit einem Gehalt an einem sauerstoffabsorbierenden Mittel, wobei eine Harzmatrix der thermoplastischen Harzzusammensetzung im Wesentlichen unverträglich ist und aus Gemischen aus einer Mehrzahl von thermoplastischen Harzen und/oder Elastomeren besteht sowie eines der unverträglichen thermoplastischen Harze und/oder Elastomeren ein Polypropylenpolymer und die anderen ein Ethylenpolymer sind sowie die thermoplastischen Harze und/oder Elastomeren in der Harzmatrix eine uneinheitlich verteilte Mehrschichtenstruktur bilden, wobei das sauerstoffabsorbierende Mittel sauerstoffabsorbierende Feststoffteilchen aufweist, die ein reduzierendes Eisenpulver und ein Oxidationsfördermittel oder einen an den Oberflächen des reduzierenden Eisenpulvers fest haftenden Katalysator enthalten, und die genannten Feststoffteilchen eine flache oder spindelförmige Gestalt sowie einen mittleren Teilchendurchmesser von 10 bis 50 μm, gemessen mit einer Laserstreumethode, und ein Aspektverhältnis (Größe der kurzen Achse/Größe der langen Achse) von nicht größer als 0,6 aufweisen sowie in einer Menge von nicht weniger als 50 % vorliegen, und der Komprimierungsgrad der Feststoffteilchen nicht kleiner als 20 % beträgt.

2. Zusammensetzung nach Anspruch 1, worin das genannte Gemisch Propylenpolymere und Ethylenpolymere in einem Gewichtsverhältnis von 100 : 1 bis 1 : 1 enthält.

3. Zusammensetzung nach Anspruch 1, worin das sauerstoffabsorbierende Mittel ein eisenhaltiges sauerstoffabsorbierendes Mittel ist.

4. Zusammensetzung nach Anspruch 1, worin das sauerstoffabsorbierende Mittel in einer Menge von 1 bis 200 Gew. %, bezogen auf das Gemisch, eingemischt ist.

5. Zusammensetzung nach Anspruch 1, worin das sauerstoffabsorbierende Mittel sauerstoffabsorbierende Feststoffteilchen mit einer spezifischen Oberfläche von nicht kleiner als 0,5 $m^2/g$ und einer Schüttdichte von nicht über 2,2 $g/cm^3$ ist, wobei das Oxidationsfördermittel oder der Katalysator in einer Menge von 0,1 bis 5 Gew.% des reduzierenden Eisenpulvers vorliegt.

6. Zusammensetzung nach Anspruch 1, worin die Feststoffteilchen des sauerstoffabsorbierenden Mittels durch Trokkenmahlen eines reduzierenden Eisenpulvers und eines Pulvers eines Oxidationsfördermittels oder eines Katalysators erhalten worden sind.

7. Sauerstoffabsorbierendes Mittel mit sauerstoffabsorbierenden Feststoffteilchen, die ein reduzierendes Eisenpulver und ein Oxidationsfördermittel oder einen an den Oberflächen des reduzierenden Eisenpulvers festhaftenden Katalysator enthalten, sowie mit einer spezifischen Oberfläche von nicht kleiner als 0,5 $m^2/g$ und einer Schüttdichte von nicht über 2,2 $g/cm^3$ aufweisen, wobei das Oxidationsfördermittel oder der Katalysator in einer Menge von 0,1 bis 5 Gew.% des reduzierenden Eisenpulvers vorliegt sowie die Feststoffteilchen des sauerstoffabsorbierenden Mittels einen durchschnittlichen Teilchendurchmesser von 10 bis 50 μm, gemessen mit einer Laserstreumethode, und ein Aspektverhältnis (Größe der kurzen Achse/Größe der langen Achse) von 0,6 oder kleiner aufweisen und in einer Menge von nicht weniger als 50 % vorliegen sowie flache oder spindelförmige Feststoffteilchen mit einem Komprimierungsgrad von nicht unter 20 % sind.

8. Sauerstoffabsorbierende Harzzusammensetzung, erhalten durch Einmischen von 1 bis 200 Gewichtsteilen eines sauerstoffabsorbierenden Mittels gemäß Anspruch 7 in 100 Gewichtsteile eines thermoplastischen Harzes.

## Revendications

1. Composition de résine thermoplastique contenant un agent absorbant l'oxygène, dans laquelle une matrice résineuse de la composition de résine thermoplastique est substantiellement non compatible et se compose de mélanges de plusieurs résines et/ou élastomères thermoplastiques, l'un des élastomères et/ou résines thermoplastiques non compatibles étant un polymère de propylène et l'autre étant un polymère d'éthylène, et les résines et/ou élastomères thermoplastiques forment une structure multicouche à distribution non homogène dans la matrice

résineuse ; et l'agent absorbant l'oxygène consiste en particules d'agent absorbant l'oxygène qui comprennent une poudre de fer réducteur et un agent activant l'oxydation ou un catalyseur adhérant fermement aux surfaces de ladite poudre de fer réducteur, et lesdites particules ont une forme plate ou une forme aciculaire et un diamètre moyen de particules de 10 à 50 μm, tel que mesuré par une méthode de diffusion laser, et un rapport d'aspect (dimension du petit axe/dimension du grand axe) non supérieur à 0,6, et lesdites particules sont présentes en une quantité d'au moins 50 %, et le degré de compression des particules est d'au moins 20 %.

**2.** Composition selon la revendication 1, dans laquelle ledit mélange est un mélange contenant des polymères de propylène et des polymères d'éthylène en un rapport en poids de 100:1 à 1:1.

**3.** Composition selon la revendication 1, dans laquelle l'agent absorbant l'oxygène est un agent absorbant l'oxygèn au fer.

**4.** Composition selon la revendication 1, dans laquelle l'agent absorbant l'oxygène est incorporé en une quantité de 1 à 200 % en poids par rapport au mélange.

**5.** Composition selon la revendication 1, dans laquelle l'agent absorbant l'oxygène consiste en particules d'agent absorbant l'oxygène ayant une surface spécifique d'au moins 0,5 $m^2/g$ et une masse volumique apparente d'au plus 2,2 $g/cm^3$, dans lesquelles l'agent activant l'oxydation ou le catalyseur est présent en une quantité de 0,1 à 5 % en poids de la poudre de fer réducteur.

**6.** Composition selon la revendication 1, dans laquelle les particules d'agent absorbant l'oxygène sont obtenues par broyage à sec d'une poudre de fer réducteur et d'une poudre d'un agent activant l'oxydation ou d'un catalyseur.

**7.** Agent absorbant l'oxygène comprenant des particules d'agent absorbant l'oxygène qui comprennent une poudre de fer réducteur et un agent activant l'oxydation ou un catalyseur adhérant fermement aux surfaces de ladite poudre de fer réducteur, et qui ont une surface spécifique d'au moins 0,5 $m^2/g$ et une masse volumique apparente d'au plus 2,2 $g/cm^3$, et dans lesquelles l'agent activant l'oxydation ou le catalyseur est présent en une quantité de 0,1 à 5 % en poids de la poudre de fer réducteur ; dans lequel les particules d'agent absorbant l'oxygène ont un diamètre moyen de particules de 10 à 50 μm tel que mesuré par une méthode de diffusion laser et un rapport d'aspect (dimension du petit axe/dimension du grand axe) de 0,6 ou moins et sont présentes en une quantité d'au moins 50 % et sont des particules de forme plate ou aciculaire ayant un degré de compression d'au moins 20 %.

**8.** Composition de résine absorbant l'oxygène obtenue en incorporant 1 à 200 parties en poids d'un agent absorbant l'oxygène selon la revendication 7 dans 100 parties en poids d'une résine thermoplastique.

Fig. 1

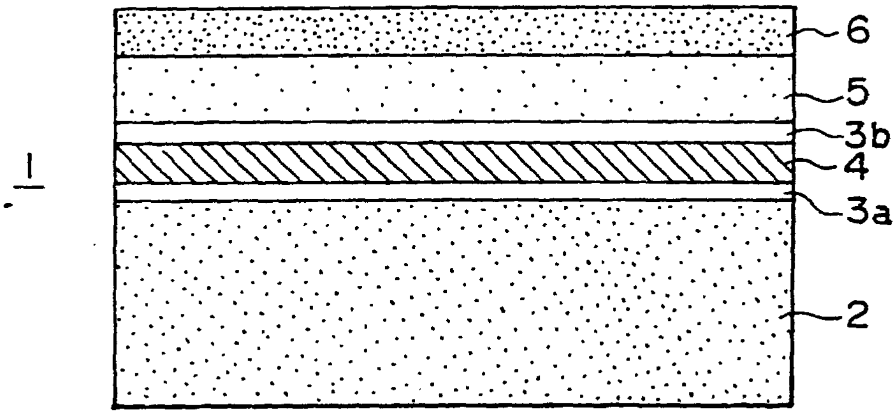


Fig. 2

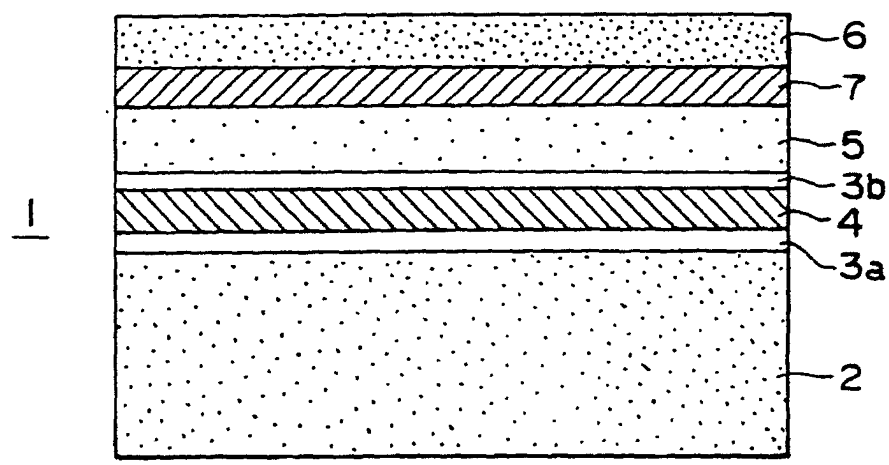

Fig. 3